# FASCICULE DE BREVET EUROPEEN

(11) **EP 2 718 552 B1**
(45) Date de publication et mention de la délivrance du brevet: **22.02.2017**
(21) Numéro de dépôt: 12728702.7
(22) Date de dépôt: 15.05.2012
(51) Int. Cl.: F01N 9/00, F01N 3/035

(54) **PROCÉDÉ DE RÉGÉNÉRATION D'UN FILTRE À PARTICULES POUR VÉHICULE AUTOMOBILE**
VERFAHREN ZUR REGENERIERUNG EINES PARTIKELFILTERS FÜR EIN KRAFTFAHRFAHRZEUG
METHOD OF REGENERATING A PARTICULATE FILTER FOR A MOTOR VEHICLE

(30) Priorité: 07.06.2011 FR 1154967
(43) Date de publication de la demande: 16.04.2014
(73) Titulaire: PEUGEOT CITROËN AUTOMOBILES SA, 78140 Vélizy Villacoublay (FR)
(72) Inventeur: COLIGNON, Christophe, F-95110 Sannois (FR); FAURE, Sebastien, F-92500 Rueil Malmaison (FR); REYES, Frank, F-92500 Rueil Malmaison (FR)
(74) Mandataire: Renous Chan, Véronique
(86) Numéro de dépôt international: PCT/FR2012/051094
(87) Numéro de publication internationale: WO 2012/168610

(56) Documents cités:
- DE-A1- 19 952 830
- FR-A1- 2 942 501

## Description

La présente invention revendique la priorité de la demande française 1154967 déposée le 7 juin 2011.

L'invention concerne un procédé de régénération d'un filtre à particules pour véhicule automobile comprenant un moteur à combustion.

Classiquement, afin de régénérer le filtre à particules qui, au fur et à mesure de l'usage du véhicule, se remplit de suie, le véhicule comprend un système électronique permettant de régénérer le filtre en commandant la combustion des suies. Cette combustion des suies se produit à haute température générée par une augmentation de la température à la sortie du moteur, éventuellement complétée par une postcombustion d'un combustible ayant lieu dans le dispositif catalytique d'oxydation, comme celui du document DE19952830.

Afin de ne pas détériorer les organes de la ligne d'échappement se trouvant en aval du lieu de la postcombustion, le système électronique contrôle la régénération en utilisant une température cible de régénération, la régulation de la température se faisant en contrôlant la quantité de combustible pour la postcombustion.

Les compromis entre l'efficacité de la régénération, la surconsommation de combustible pour la postcombustion et la dilution de combustible dans l'huile (dans le cas où de l'injection du combustible se fait dans les cylindres du moteur - ainsi que dans ce cas, les risques de départ sur huile) ne sont pas optimisés. De plus, du fait de la durée importante du procédé de régénération, les risques de son avortement par arrêt du moteur sont assez élevés.

L'invention vise à résoudre un ou plusieurs de ces inconvénients.

L'invention porte ainsi sur un procédé de régénération d'un filtre à particules pour véhicule automobile comprenant un moteur à combustion **alimenté** en air par une conduite d'admission et en carburant par une conduite de carburant, une ligne d'échappement débouchant dudit moteur et permettant de rejeter les gaz produits par la combustion du carburant dans ledit moteur, ladite ligne d'échappement comprenant ledit filtre à particules adapté à filtrer les particules se trouvant dans les gaz d'échappement et, en amont dudit filtre, un dispositif catalytique d'oxydation adapté à permettre l'oxydation catalytique des imbrûlés se trouvant dans les gaz d'échappement, le procédé comprenant une phase de régénération en commandant la combustion des suies, combustion des suies se produisant à haute température générée par une postcombustion en aval du moteur d'un combustible, typiquement une partie du carburant utilisé par le moteur, ayant lieu dans le dispositif catalytique d'oxydation qui est contrôlée en utilisant une température cible de régénération, la régulation de la température cible de régénération se faisant en contrôlant la quantité de combustible pour la postcombustion, caractérisée en ce que le procédé comprend une phase préalable de surchauffe qui est contrôlée en utilisant une température cible de surchauffe plus élevée que la température cible de régénération.

On comprend au sens de l'invention par température cible la température qui est mesurée en entrée du filtre à particules, représentative de la température au sein du filtre à particules.

Ainsi, en utilisant une température cible élevée en début du procédé (phase de surchauffe), la montée en température du filtre à particules est beaucoup plus rapide, et en diminuant la température cible dans un second temps (phase de régénération), la température reste suffisamment basse pour ne pas endommager le dispositif catalytique d'oxydation, ce qui permet une régénération de courte durée, efficace, et optimisant la dilution dans l'huile.

Selon un mode de réalisation particulier, la température cible de surchauffe est déterminée par une cartographie dont les paramètres d'entrée dépendent des conditions de roulage du véhicule avant l'initiation du procédé de régénération.

Selon un autre mode de réalisation particulier, la température cible de surchauffe est déterminée par une cartographie dont les paramètres d'entrée dépendent de la masse de suies dans le filtre à particules.

Selon encore un autre mode de réalisation particulier, la température cible de surchauffe est déterminée par une cartographie dont les paramètres d'entrée dépendent de la dynamique de montée en température d'un dispositif catalytique d'oxydation disposé en amont du filtre à particules.

Selon un autre mode de réalisation particulier, le passage de la phase de surchauffe à la phase de régénération est commandé par l'arrivée au terme d'une durée prédéterminée de la phase de surchauffe. Selon une variante de ce mode particulier, la durée de la phase de surchauffe est une valeur constante. Selon une autre variante, la durée de la phase de surchauffe est une valeur dépendant des conditions de roulage du véhicule avant l'initiation du procédé de régénération et/ou de la masse de suies dans le filtre à particules et/ou de la dynamique de montée en température d'un dispositif catalytique d'oxydation disposé en amont du filtre à particules.

Selon un autre mode de réalisation particulier, le passage de la phase de surchauffe à la phase de régénération est commandé par l'atteinte d'une température de changement de phase. Selon une variante de ce mode particulier, la température de changement de phase est une valeur constante. Selon une autre variante, la température de changement de phase est une valeur dépendant des conditions de roulage du véhicule avant l'initiation du procédé de régénération et/ou de la masse de suies dans le filtre à particules et/ou de la dynamique de montée en température d'un dispositif catalytique d'oxydation disposé en amont du filtre à particules.

D'autres caractéristiques et avantages de l'invention ressortiront clairement de la description qui en est faite ci-après, à titre indicatif et nullement limitatif, en référence aux dessins annexés, dans lesquels :
- La figure 1 illustre, pour différents essais de régénération, l'efficacité de cette dernière en fonction de la température en amont du filtre à particules en fin de la régénération, et
- La figure 2 illustre, pour les mêmes essais que ceux de la figure 1, l'efficacité de la régénération en fonction du cumul de combustible injecté pour la postcombustion.

Un véhicule automobile comprend un moteur à combustion qui est alimenté en air par une conduite d'admission et en carburant par une conduite de carburant. Il comprend également une ligne d'échappement débouchant du moteur et permettant de rejeter les gaz produits par la combustion du carburant dans le moteur.

La présente invention concerne un véhicule comprenant, dans la ligne d'échappement un filtre à particules adapté à filtrer les particules se trouvant dans les gaz d'échappement et, en amont de ce filtre, un dispositif catalytique d'oxydation adapté à permettre l'oxydation catalytique des imbrûlés se trouvant dans les gaz d'échappement. Dans le présent mode de réalisation, la ligne d'échappement comprend également, en aval du dispositif catalytique d'oxydation, un dispositif catalytique de réduction adapté à permettre la réduction catalytique des oxydes d'azote se trouvant dans les gaz d'échappement.

Classiquement, afin de régénérer le filtre à particules qui, au fur et à mesure de l'usage du véhicule, se remplit de suie, le véhicule comprend un système électronique permettant de régénérer le filtre en commandant la combustion des suies. Cette combustion des suies se produit à haute température générée par une postcombustion (en aval du moteur) d'un combustible (typiquement, une partie du carburant utilisé par le moteur) ayant lieu dans le dispositif catalytique d'oxydation. Afin de ne pas détériorer les organes de la ligne d'échappement se trouvant en aval du lieu de la postcombustion, le système électronique contrôle la régénération (en général le débit de combustible de postcombustion) en utilisant une température cible de régénération suffisamment basse pour ne pas détériorer ni le dispositif catalytique d'oxydation, ni le filtre à particules, ni, le dispositif catalytique de réduction s'il y en a un.

Selon l'invention, le procédé de régénération du filtre à particules comprend deux phases : une phase de régénération avec une température cible de régénération, et, préalablement à cette phase de régénération, une phase de surchauffe avec une température cible de surchauffe supérieure à la température cible de régénération.

Du fait que la température cible de surchauffe soit plus élevée que la température cible de régénération, la montée en température du filtre à particules est plus rapide que dans un procédé classique. Le fait de diminuer ensuite la température cible pour la phase de régénération permet, d'une part, d'éviter d'avoir une température trop élevée risquant d'endommager les éléments se trouvant dans la ligne d'échappement, et, d'autre part, de réduire la consommation de combustible ainsi que le taux instantané de dilution du combustible dans l'huile (dans le cas d'une injection dans les cylindres du moteur). Bien que la température cible élevée est limitée à la première phase du procédé, la présente invention permet d'avoir un gain se traduisant à la fois par une diminution de consommation de combustible pour la postcombustion, par une efficacité importante de la régénération (supérieure à 90 %) et par une réduction de la durée globale du procédé de régénération (et donc une limitation des risques d'arrêt du moteur pendant un tel procédé).

Selon un mode de réalisation particulier, la température cible de surchauffe, la durée de la phase de surchauffe, la température cible de régénération et la durée de la phase de régénération sont fixées par le système électronique.

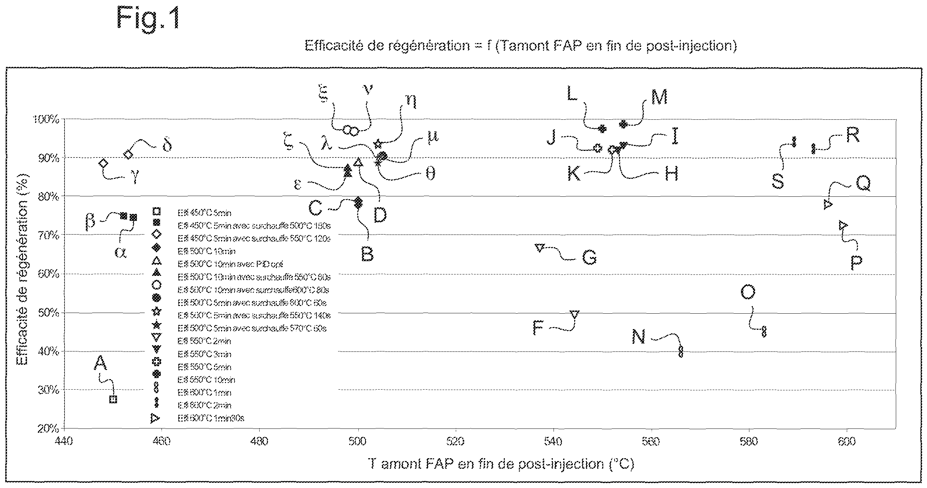

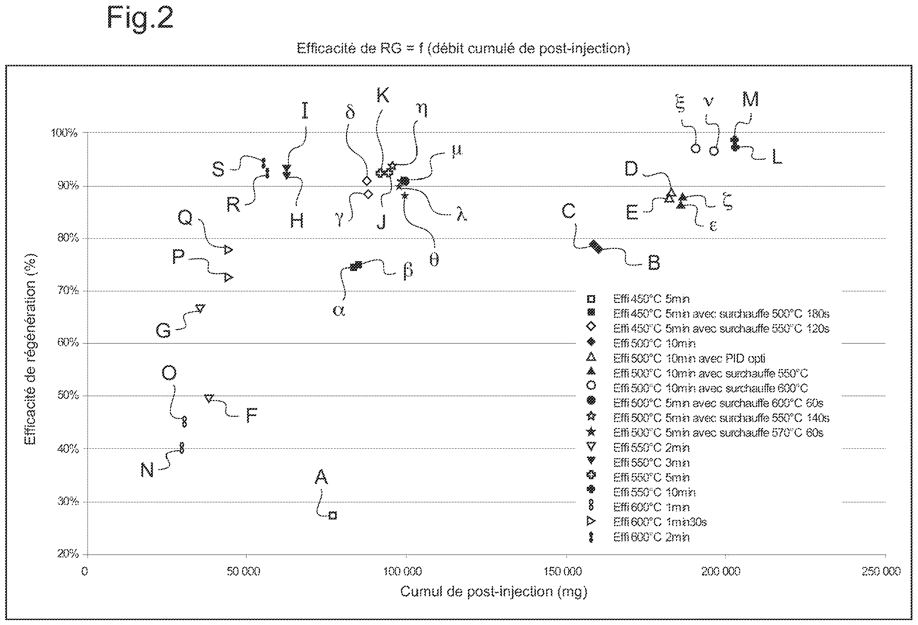

Différents essais ont été réalisés, dont les résultats sont illustrés aux figures 1 et 2.
1. Les essais concernant les procédés de régénération classiques, avec une seule phase sont représentés par les points référencés par des lettres latines (A : 5 minutes avec une température cible de 450 °C ; B et C : 10 minutes avec une température cible de 500 °C ; D et E : 10 minutes avec une température cible de 500 °C et un régulateur PID optimisé ; F et G : 2 minutes avec une température cible de 550 °C ; H et I : 3 minutes avec une température cible de 550 °C ; J et K : f) 5 minutes avec une température cible de 550 °C ; L et M : 10 minutes avec une température cible de 550 °C ; N et O : 1 minute avec une température cible de 600 °C ; P et Q : 1 minute et 30 secondes avec une température cible de 600 °C ; et R et S : 2 minutes avec une température cible de 600 °C);
2. Les essais concernant les procédés de régénération conformes à la présente invention, avec deux phases, sont représentés par les points référencés par les lettres grecques oπρστυϕχφω (α et β : 3 minutes avec une température cible de 500 °C suivi de 5 minutes avec une température cible de 450 °C ; γ et δ : 2 minutes avec une température cible de 550 °C suivi de 5 minutes avec une température cible de 450 °C ; ε et ζ : 1 minute avec une température cible de 550 °C suivi de 10 minutes avec une température cible de 500 °C ; η : 2 minutes et 20 secondes avec une température cible de 550 °C suivi de 5 minutes avec une température cible de 500 °C ; θ et λ: 1 minute avec une température cible de 570 °C suivi de 5 minutes avec une température cible de 500 °C ; µ : 1 minute avec une température cible de 600 °C suivi de 5 minutes avec une température cible de 500 °C ; ν et ξ : 1 minute et 20 secondes avec une température cible de 600 °C suivi de 10 minutes avec une température cible de 500 °C).

Même avec des températures cible de régénération basses (450 °C), l'efficacité est beaucoup plus importante dès qu'il y a une phase de surchauffe même avec une température cible de surchauffe peu élevée. Avec des températures cibles de régénération plus élevées (500 °C) l'efficacité est toujours supérieure à 85 % avec une surchauffe, même faible.

Dans chacun des essais avec une phase de surchauffe initiale, la température finale en amont du filtre à particules ne dépasse que de très peu 500°C, et cela pour des efficacités particulièrement élevées (à comparer avec les températures finales en amont du filtre à particules dépassant très souvent 550 °C dans les procédés classiques).

On comprend ici au sens de l'invention par température finale la température celle que l'on a pendant et en fin de régénération. Schématiquement, le cycle thermique comprend donc une phase de surchauffe, puis un palier à une température inférieure, on peut alors avantageusement viser cette température inférieure, plutôt que la température de régénération habituellement visée.

Selon d'autres mode de réalisation, au moins l'une des valeurs parmi la température cible de surchauffe, la durée de la phase de surchauffe, la température cible de régénération et la durée de la phase de régénération est déterminée en fonction des données de fonctionnement du véhicule, notamment au moment de l'initialisation du procédé.

Ainsi, la température cible de surchauffe peut être déterminée par une cartographie dont les paramètres d'entrée dépendent des conditions de roulage du véhicule avant l'initiation du procédé de régénération (ces conditions de roulage pouvant être la vitesse du véhicule et/ou le couple du moteur) et/ou la masse de suies dans le filtre à particules et/ou la dynamique de montée en température du dispositif catalytique d'oxydation (cette dynamique pouvant dépendre du débit d'air à l'admission du moteur).

La température cible de surchauffe peut être supérieure d'au moins 40°C, voire d'au moins 80°C ou même 100°C par rapport à la température cible de régénération.

Le passage de la phase de surchauffe à la phase de régénération peut être commandée par l'arrivée au terme d'une durée prédéterminée de la phase de surchauffe et/ou par l'atteinte d'une température de changement de phase.

La durée prédéterminée de la phase de surchauffe peut être une valeur constante (par exemple, 1, 2 ou 3 minutes) ou une valeur déterminée par une cartographie dont les paramètres d'entrée dépendent des conditions de roulage du véhicule avant l'initiation du procédé de régénération (ces conditions de roulage pouvant être la vitesse du véhicule et/ou le couple du moteur) et/ou la masse de suies dans le filtre à particules et/ou la dynamique de montée en température du dispositif catalytique d'oxydation (cette dynamique pouvant dépendre du débit d'air à l'admission du moteur).

La température mesurée et comparée par rapport à la température de changement de phase peut être une température mesurée dans la ligne d'échappement, et, de façon plus précise, une température mesurée entre le dispositif catalytique d'oxydation et le filtre à particules. Ainsi, la température mesurée peut être celle en amont du filtre à particules, celle en aval du dispositif catalytique d'oxydation, ou celle en amont du dispositif catalytique de réduction (que ce dispositif catalytique de réduction se trouve en amont ou en aval du filtre à particules).

La température de changement de phase peut être la température cible de surchauffe ou, de préférence, une valeur de la température cible de surchauffe corrigée par une valeur de protection (afin d'éviter que la température cible de surchauffe soit dépassée du fait de l'inertie thermique du système). Typiquement, la correction est réalisée par la soustraction de la valeur de protection à la température cible de surchauffe. La valeur de protection peut être une valeur constante ou une valeur déterminée par une cartographie dont les paramètres d'entrée dépendent des conditions de roulage du véhicule avant l'initiation du procédé de régénération (ces conditions de roulage pouvant être la vitesse du véhicule et/ou du couple du moteur) et/ou la masse de suies dans le filtre à particules et/ou la dynamique de montée en température du dispositif catalytique d'oxydation (cette dynamique pouvant dépendre du débit d'air à l'admission du moteur).

En adaptant le procédé de régénération (par exemple, les températures cibles de surchauffe et de régénération, les durées des phases de surchauffe et de régénération, ou la température de changement de phase) en fonction des données de fonctionnement du véhicule, il est possible d'optimiser le procédé et de protéger au mieux le dispositif catalytique d'oxydation dont la température maximale qu'il supporte dépend également des conditions de roulage.

La présente invention peut être utilisée pour tout type de filtre à particules (nu, additivé ou catalysé), et quelle que soit les éléments de la ligne d'échappement et leurs positions relatives (en absence ou en présence d'un dispositif catalytique de réduction et que ce dernier soit en amont ou en aval du filtre à particules).

## Revendications

1. Procédé de régénération d'un filtre à particules pour véhicule automobile comprenant un moteur à combustion alimenté en air par une conduite d'admission et en carburant par une conduite de carburant, une ligne d'échappement débouchant dudit moteur et permettant de rejeter les gaz produits par la combustion du carburant dans ledit moteur, ladite ligne d'échappement comprenant ledit filtre à particules adapté à filtrer les particules se trouvant dans les gaz d'échappement et, en amont dudit filtre, un dispositif catalytique d'oxydation adapté à permettre l'oxydation catalytique des imbrûlés se trouvant dans les gaz d'échappement, le procédé comprenant une phase de régénération en commandant la combustion des suies, combustion des suies se produisant à haute température générée par une postcombustion en aval du moteur d'un combustible, typiquement une partie du carburant utilisé par le moteur, ayant lieu dans le dispositif catalytique d'oxydation qui est contrôlée en utilisant une température cible de régénération, la régulation de la température cible de régénération se faisant en contrôlant la quantité de combustible pour la postcombustion, **caractérisée en ce que** le procédé comprend une phase préalable de surchauffe qui est contrôlée en utilisant une température cible de surchauffe plus élevée que la température cible de régénération.

2. Procédé selon la revendication 1, **caractérisé en ce que** la température cible de surchauffe est déterminée par une cartographie dont les paramètres d'entrée dépendent des conditions de roulage du véhicule avant l'initiation du procédé de régénération.

3. Procédé selon l'une des revendications 1 et 2, **caractérisé en ce que** la température cible de surchauffe est déterminée par une cartographie dont les paramètres d'entrée dépendent de la masse de suies dans le filtre à particules.

4. Procédé selon l'une des revendications 1 à 3, **caractérisé en ce que** la température cible de surchauffe est déterminée par une cartographie dont les paramètres d'entrée dépendent de la dynamique de montée en température d'un dispositif catalytique d'oxydation disposé en amont du filtre à particules.

5. Procédé selon l'une des revendications 1 à 4, **caractérisé en ce que** le passage de la phase de surchauffe à la phase de régénération est commandé par l'arrivée au terme d'une durée prédéterminée de la phase de surchauffe.

6. Procédé selon la revendication 5, **caractérisé en ce que** la durée de la phase de surchauffe est une valeur constante.

7. Procédé selon la revendication 5, **caractérisé en ce que** la durée de la phase de surchauffe est une valeur dépendant des conditions de roulage du véhicule avant l'initiation du procédé de régénération et/ou de la masse de suies dans le filtre à particules et/ou de la dynamique de montée en température d'un dispositif catalytique d'oxydation disposé en amont du filtre à particules.

8. Procédé selon l'une des revendications 1 à 7, **caractérisé en ce que** le passage de la phase de surchauffe à la phase de régénération est commandée par l'atteinte d'une température de changement de phase.

9. Procédé selon la revendication 8, **caractérisé en ce que** la température de changement de phase est une valeur constante.

10. Procédé selon la revendication 8, **caractérisé en ce que** la température de changement de phase est une valeur dépendant des conditions de roulage du véhicule avant l'initiation du procédé de régénération et/ou de la masse de suies dans le filtre à particules et/ou de la dynamique de montée en température d'un dispositif catalytique d'oxydation disposé en amont du filtre à particules.

## Patentansprüche

1. Verfahren zum Regenerieren eines Partikelfilters für ein Kraftfahrzeug, einen Verbrennungsmotor umfassend, der durch eine Einlassleitung mit Luft versorgt wird und durch eine Kraftstoffleitung mit Kraftstoff versorgt wird, wobei eine Abgasleitung aus dem besagten Motor austritt und es ermöglicht, die durch die Verbrennung des Kraftstoffes im besagten Motor erzeugten Gase abzuführen, wobei die besagte Abgasleitung den besagten Partikelfilter umfasst, der ausgeführt ist, um die Partikel zu filtern, die sich in den Auspuffgasen befinden, sowie stromaufwärts des besagten Filters eine katalytische Oxidationsanlage, die ausgeführt ist, um die katalytische Oxidation der unverbrannten Stoffe zu ermöglichen, die sich in den Auspuffgasen befinden, wobei das Verfahren eine Regenerationsphase mit der Ansteuerung der Rußverbrennung umfasst, wobei die Rußverbrennung mit einer hohen Temperatur erfolgt, die durch eine Nachverbrennung, stromabwärts des Motors, eines Kraftstoffs, typischerweise eines Teils des Kraftstoffs, erzeugt wird, der vom Motor verwendet wird, die in der katalytischen Oxidationsanlage stattfindet, die unter Verwendung einer Zieltemperatur für die Regeneration gesteuert wird, wobei die Regulierung der Zieltemperatur für die Regeneration erfolgt, indem man die Kraftstoffmenge für die Nachverbrennung steuert, **dadurch gekennzeichnet, dass** das Verfahren eine vorbereitende Überhitzungsphase umfasst, die unter Verwendung einer Zieltemperatur für die Überhitzung gesteuert wird, die höher ist, als die Zieltemperatur für die Regeneration.

2. Verfahren nach Anspruch 1, **dadurch gekennzeichnet, dass** die Zieltemperatur für die Überhitzung durch eine Kartographie bestimmt wird, deren Eingangsparameter von den Fahrbedingungen des Fahrzeugs vor der Einleitung des Regenerationsverfahrens abhängen.

3. Verfahren nach einem der Ansprüche 1 und 2, **dadurch gekennzeichnet, dass** die Zieltemperatur für die Überhitzung durch eine Kartographie bestimmt wird, deren Eingangsparameter von der Rußmasse im Partikelfilter abhängen.

4. Verfahren nach einem der Ansprüche 1 bis 3, **dadurch gekennzeichnet, dass** die Zieltemperatur für die Überhitzung durch eine Kartographie bestimmt wird, deren Eingangsparameter von der Dynamik des Temperaturanstiegs einer katalytischen Oxidationsanlage abhängen, die stromaufwärts des Partikelfilters angeordnet ist.

5. Verfahren nach einem der Ansprüche 1 bis 4, **dadurch gekennzeichnet, dass** der Übergang von der Überhitzungsphase in die Regenerationsphase durch das Erreichen des Endes einer vorbestimmten Dauer der Überhitzungsphase gesteuert wird.

6. Verfahren nach Anspruch 5, **dadurch gekennzeichnet, dass** die Dauer der Überhitzungsphase ein konstanter Wert ist.

7. Verfahren nach Anspruch 5, **dadurch gekennzeichnet, dass** die Dauer der Überhitzungsphase ein Wert ist, der von den Fahrbedingungen des Fahrzeugs vor der Einleitung des Regenerationsverfahrens und/oder von der Rußmasse im Partikelfilter und/oder von der Dynamik des Temperaturanstiegs einer katalytischen Oxidationsanlage abhängt, die stromaufwärts des Partikelfilters angeordnet ist.

8. Verfahren nach einem der Ansprüche 1 bis 7, **dadurch gekennzeichnet, dass** der Übergang von der Überhitzungsphase in die Regenerationsphase durch das Erreichen einer Phasenwechseltemperatur gesteuert wird.

9. Verfahren nach Anspruch 8, **dadurch gekennzeichnet, dass** die Phasenwechseltemperatur ein konstanter Wert ist.

10. Verfahren nach Anspruch 8, **dadurch gekennzeichnet, dass** die Phasenwechseltemperatur ein Wert ist, der von den Fahrbedingungen des Fahrzeugs vor der Einleitung des Regenerationsverfahrens und/oder von der Rußmasse im Partikelfilter und/oder von der Dynamik des Temperaturanstiegs einer katalytischen Oxidationsanlage abhängt, die stromaufwärts des Partikelfilters angeordnet ist.

## Claims

1. Method for regenerating a particle filter for a motor vehicle, comprising a combustion engine suppled with air by an inlet pipe and with fuel by a fuel pipe, an exhaust line emerging from said engine and discharging the gases produced by the combustion of the fuel in said engine, said exhaust line comprising said particle filter suitable for filtering the particles situated in the exhaust gases and, upstream of said filter, a catalytic oxidation device suitable for the catalytic oxidation of the unburnt substances in the exhaust gases, the method comprising a phase of regeneration by controlling the combustion of the soot, the combustion of the soot occurring at high temperature generated by a post-combustion of a fuel downstream of the engine, typically part of the fuel used by the engine, taking place in the catalytic oxidisation device, which is controlled using a target regeneration temperature, the target regeneration temperature being regulated by controlling the quantity of fuel for the post-combustion, **characterised in that** the method comprises a prior superheating phase that is controlled using a target superheating temperature higher than the target regeneration temperature.

2. Method according to claim 1, **characterised in that** the target superheating temperature is determined by a mapping, the input parameters of which depend on the running conditions of the vehicle before the initiation of the regeneration method.

3. Method according to one of claims 1 and 2, **characterised in that** the target superheating temperature is determined by a mapping, the input parameters of which depend on the mass of soot in the particle filter.

4. Method according to one of claims 1 to 3, **characterised in that** the target superheating temperature is determined by a mapping, the input parameters of which are dependent on the temperature-rise dynamics of a catalytic oxidation device disposed upstream of the particle filter.

5. Method according to one of claims 1 to 4, **characterised in that** the change from the superheating phase to the regeneration phase is controlled by the ending of a predetermined duration of the superheating phase.

6. Method according to claim 5, **characterised in that** the duration of the superheating phase is a constant value.

7. Method according to claim 5, **characterised in that** the duration of the superheating phase is a value dependent on the running conditions of the vehicle before the initiation of the regeneration process and/or on the mass of soot in the particle filter and/or on the temperature rise dynamics of a catalytic oxidation device disposed upstream of the particle filter.

8. Method according to one of claims 1 to 7, **characterised in that** the change from the superheating phase to the regeneration phase is controlled by the reaching of a phase-change temperature.

9. Method according to claim 8, **characterised in that** the phase-change temperature is a constant value.

10. Method according to claim 8, **characterised in that** the phase-change temperature is a value dependent on the running conditions of the vehicle before the initiation of the regeneration process and/or on the mass of soot in the particle filter and/or on the temperature-rise dynamics of a catalytic oxidation device disposed upstream of the particle filter.
